# EUROPEAN PATENT SPECIFICATION

(11) **EP 1 241 292 B1**
(45) Date of publication and mention of the grant of the patent: **19.10.2005**
(21) Application number: 02005621.4
(22) Date of filing: 12.03.2002
(51) Int. Cl.: D06C 11/00, F16H 7/02, B24B 19/00, B24B 47/12

(54) **Drum-type machine adopting a motion transmission device**
Trommeltypmaschine mit einer Bewegungsübertragungsvorrichtung
Machine à tambour équipée d'un dispositit de transmission de mouvement

(30) Priority: 15.03.2001 IT UD010052
(43) Date of publication of application: 18.09.2002
(73) Proprietor: LAFER SpA, 36015 Schio (Vicenza) (IT)
(72) Inventor: Panozzo, Antonio, 36030 Villaverla (VI) (IT)
(74) Representative: Petraz, Gilberto Luigi

(56) References cited:
- EP-A- 0 945 540
- EP-A- 1 072 713
- DE-A- 3 719 006
- GB-A- 458 864

## Description

### FIELD OF THE INVENTION

The invention concerns a drum-type machine adopting a motion transmission device.

The invention is applied particularly but not exclusively in the field of textiles, on raising machines, grinding machines or brushing machines, which have a rotary drum on whose circumference working cylinders, rollers or brushes, also rotary, are assembled, over which a fabric to be worked is made to pass.

### BACKGROUND OF THE INVENTION

In the field of textiles, there are well-known problems found in the use of conventional transmission devices with belts used to supply motion to satellite cylinders or rollers assembled on the periphery of the rotary drum of raising machines or grinding machines. Traditional systems generally use trapezoid belts, which have considerable problems of noisiness, shaking and vibrations which lead to a rapid mechanical deterioration, and also of sliding on the idler pulleys; this causes a considerable reduction in the working efficiency.

It is known, from EP-A-945.540, a transmission system according to the preamble of claim 1. This solution, with a belt with a simple toothing, does not completely solve the problems mentioned above, particularly those which derive from the anomalous lengthening of the belts and their stretching caused by the passage of the smooth back on the idler rollers.

Moreover, the secondary belt has a considerable development, which increases the problems connected to the lengthening and sliding on the idler rollers. Therefore, the problem remains of an enduring efficiency of the belts, and also problems connected to the reduction in working performance. These problems are even more considerable when the power to be transmitted to the working cylinders is greater, and this happens in particular in machines which use a low number of working cylinders, to each of which it is necessary to transmit considerable power.

DE-37 19 006 describes a mechanical device consisting of a reduction gearbox, or epicyclic reduction gear, comprising two central wheels and a plurality of satellite wheels connected to the central wheel by means of a plurality of belts.

This solution concerns a completely different application from that relating to raising machines of the type described in EP-A-945.540; the problems of EP 945 540, concerning the presence of a central rotary drum, on the periphery of which satellite wheels, also rotary, are mounted, are completely different from those relating to a reduction gearbox where the toothed belts form a self-supporting cage, as in DE-37 19 006.

For example, it can be seen how the toothed belts shown in DE 3 719 006 lie on various different planes while the transmission system of a raising machine of the type described in EP 945 540 provides that the belts all lie on a same common plane.

The present Applicant has devised and embodied this invention to solve these shortcomings of the state of the art, and to obtain further advantages.

### SUMMARY OF THE INVENTION

The invention is set forth and characterized in the main claims, while the dependent claims describe other innovative characteristics of the invention.

The purpose of the invention is to achieve a transmission device with toothed belts for drum-type machines wherein it is possible to transmit high power to the working cylinders (or rollers, or brushes) without entailing problems of sliding and anomalous lengthening of the belts themselves.

Another purpose is to prevent shaking and vibrations of the belts, and also the noisiness deriving from their passing on the idler rollers.

In accordance with these purposes, the motion transmission device adopted in a drum-type machine according to the invention comprises a primary toothed belt, with a simple toothing, able to transmit motion from a drive shaft to an idler pulley, and a plurality of double-toothing secondary belts, each one able to transmit motion from said idler pulley to at least one of said working cylinders.

In practice, each of said double-toothing secondary belts defines one portion of the motion transmission; each of said portions can affect either a single working cylinder (or roller or brush), in the case that it is necessary to transmit very high values of power to this cylinder, or two or more working cylinders, particularly in the case of peripheral cylinders which are small in size with respect to the drum and hence with a reduced power requirement.

The solution of using double-toothing secondary transmission belts, together with the fact of dividing the transmission plan into a plurality of portions, each one comprising one or more peripheral cylinders, allows to transmit very high values of power without risks of sliding, lengthening or stretching of the belts. A high working efficiency is therefore guaranteed, together with a prolongation of the working life of the belts and a reduction in noisiness during working.

### BRIEF DESCRIPTION OF THE DRAWINGS

These and other characteristics of the invention will become clear from the following description of some preferential forms of embodiment, given as a non-restrictive example, with reference to the attached drawings wherein:
Fig. 1 shows a front cutaway view of a motion transmission device according to the invention applied to a grinding machine with brushes;

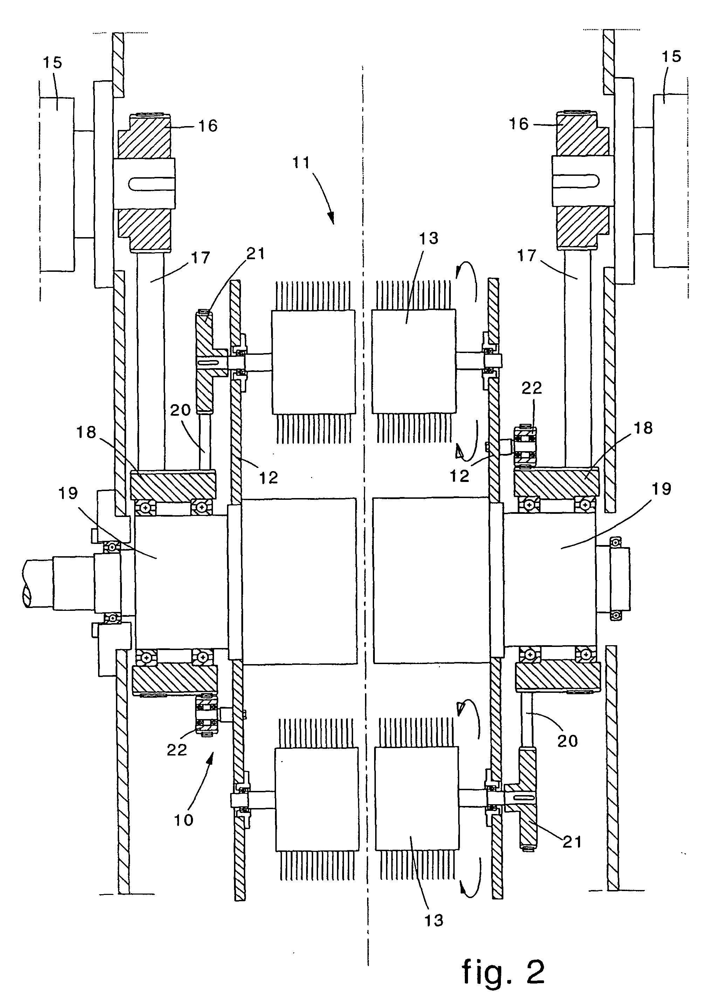

Fig. 2 shows a lateral cutaway view, partly sectioned, of the machine in Fig. 1;
Fig. 3 shows an application of the device according to the invention to a raising or grinding machine of a conventional type.

### DETAILED DESCRIPTION OF SOME PREFERENTIAL EMBODIMENTS

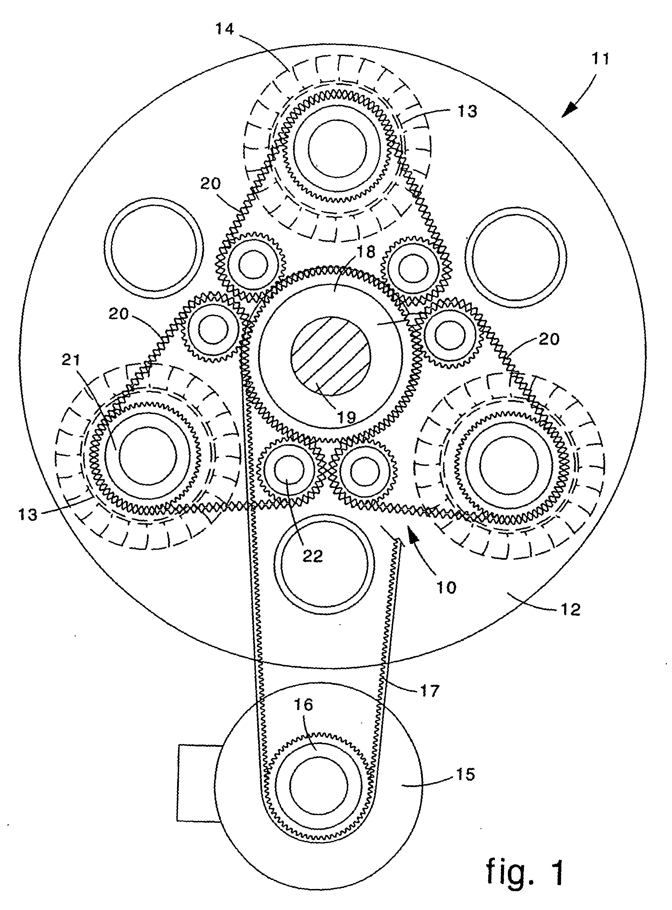

With reference to Fig. 1, a motion transmission device 10 according to the invention is applied to a grinding machine 11 comprising a rotary drum 12 on whose periphery brushes 13 are assembled, in this case three, covered with abrasive material 14. On the opposite side of the drum 12 there can be an identical transmission device 10 for an equal number of brushes 13, possibly rotating in the opposite direction with respect to the brushes 13 shown in Fig. 1.

The drum 12 is made to rotate at a velocity of normally between about 5 and 150 rpm, while the brushes 13 rotate at a velocity of between 500 and 2000 rpm.

The device 10 comprises a drive motor 15 on whose shaft a toothed drive wheel 16 is keyed. By means of a primary belt 17 with a simple toothing, the toothed wheel 16 makes a toothed idler wheel 18 rotate, arranged on the rotation shaft 19 of the rotary drum 12.

In this case, three double-toothing secondary belts 20 engage on the toothed idler wheel 18, each of which is able to transmit the rotation motion to a toothed pulley 21 coaxially associated with a relative brush 13.

Each secondary toothed belt 20 cooperates, in this case, with two idler pulleys 22, of which at least one can be laterally and/or radially displaced in order to function as an element to adjust the tension of the relative belt 20.

With the configuration shown in Fig. 1 therefore, it is possible to guarantee the transmission of a high value of power from the motor 15 to each of the brushes 13, since using double-toothing secondary belts 20 prevents risks of lengthening or sliding derived from the high forces of traction to which the belts are subjected.

Moreover, the secondary belts 20 have a limited development, so that the transmission of motion between the idler wheel 18 and each of the toothed pulleys 21 is substantially direct and ensures a high efficiency even in limit conditions.

Other advantages derive from the marked reduction in noise and vibrations during use.

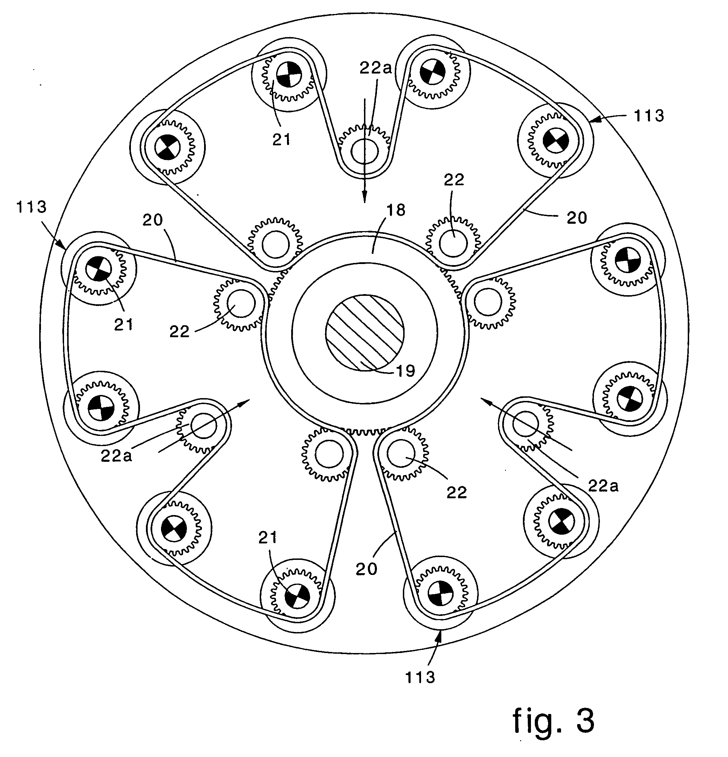

According to a variant as shown in Fig. 3, each double-toothing secondary belt 20 is able to transmit motion to a plurality of working cylinders 113, in this case four, which are much smaller in size than the brushes 13 and therefore require a considerably smaller power. This solution is particularly suitable for raising and grinding machines 11 of a substantially conventional type, which have 24 or 32 small rotary working cylinders 113, respectively 12 or 16 per side, covered with raising or abrasive material and arranged on the periphery of a rotary drum 12. In this case, each double-toothing secondary belt 20 is associated with three idler pulleys 22, of which the central one 22a can be displaced radially in order to adjust the tension of the relative belt 20.

It is also obvious that the transmission device 10 allows, during the design stage, to group together a desired number of cylinders, rollers or brushes 13, 113, associating them with a relative double-toothing secondary belt 20 according to the power to be transmitted, the type of working to be done, the power of the motor 15, the size of the drum 12 and, more generally, according to every other working parameter which conditions the functioning of the raising or grinding machines 11.

## Claims

1. A machine (11) comprising a rotary drum (12) on whose periphery a plurality of rotary cylinders, rollers or brushes (13, 113) are assembled and a motion transmission device, said device comprising motor means (15) able to transmit motion, by means of first belt means (17), to at least an idler wheel (18) arranged substantially coaxial with the rotation shaft (19) of said rotary drum (12), **characterized in that** it comprises a plurality of double-toothing secondary belts (20), each one able to transmit motion from said idler wheel (18) to at least one of said cylinders, rollers or brushes (13, 113).

2. Machine as in claim 1, **characterized in that** said motion transmission device comprises a double-toothing secondary belt (20) for each of said cylinders, rollers or brushes (13, 113).

3. Machine as in claim 1, **characterized in that** each of said double-toothing secondary belts (20) is able to transmit the motion of rotation to two or more of said cylinders, rollers or brushes (13, 113).

4. Machine as in claim 1, **characterized in that** each double-toothing secondary belt (20) cooperates with at least two idler pulleys (22), of which at least one (22a) can be displaced laterally and/or radially in order to adjust the tension of the relative belt (20).

5. Machine as in claim 1, **characterized in that** it is a grinding machine (11) comprising a plurality of brushes (13) covered with abrasive material (14).

6. Machine as in claim 1, **characterized in that** it is a raising machine (11) comprising a plurality of cylinders (113) covered with raising material.

## Patentansprüche

1. Maschine (11) mit einer Rotationstrommel (12), an deren Umfang mehrere rotierende Zylinder, Walzen oder Bürsten (13, 113) angebaut sind, und mit einer Bewegungsübertragungsvorrichtung, die über eine Motoreinrichtung (15) verfügt, die, durch eine erste Riemeneinrichtung (17), eine Bewegung an mindestens ein angetriebenes Rad (18) übertragen kann, das im Wesentlichen koaxial zur Rotationswelle (19) der Rotationstrommel (12) angeordnet ist, **dadurch gekennzeichnet, dass** sie über mehrere Sekundärriemen (20) mit Doppelzahnung verfügt, von denen jeder eine Bewegung vom angetriebenen Rad (18) auf mindestens einen der Zylinder, Walzen oder Bürsten (13, 113) übertragen kann.

2. Maschine nach Anspruch 1, **dadurch gekennzeichnet, dass** die Bewegungsübertragungsvorrichtung für jeden der Zylinder, Walzen oder Bürsten (13, 113) über einen Sekundärriemen (20) mit Doppelzahnung verfügt.

3. Maschine nach Anspruch 1, **dadurch gekennzeichnet, dass** jeder der Sekundärriemen (20) mit Doppelzahnung die Rotationsbewegung an zwei oder mehr der Zylinder, Walzen oder Bürsten übertragen kann.

4. Maschine nach Anspruch 1, **dadurch gekennzeichnet, dass** jeder Sekundärriemen (20) mit Doppelzahnung mit mindestens zwei angetriebenen Riemenscheiben (22) zusammenwirkt, von denen mindestens eine (22a) lateral und/oder radial verstellt werden kann, um die Zugspannung des jeweiligen Riemens (20) einzustellen.

5. Maschine nach Anspruch 1, **dadurch gekennzeichnet, dass** sie eine Schleifmaschine (11) mit mehreren Bürsten (13) ist, die mit einem Schleifmaterial (14) bedeckt sind.

6. Maschine nach Anspruch 1, **dadurch gekennzeichnet, dass** sie eine Velouriermaschine (11) mit mehreren Zylindern (113) ist, die mit einem Velouriermaterial bedeckt sind.

## Revendications

1. Machine (11) comprenant un tambour pivotant (12), sur la périphérie duquel est assemblée une pluralité de cylindres pivotants, galets ou brosses (13, 113), et un dispositif de transmission de mouvement, ledit dispositif comprenant des moyens moteurs (15) aptes à transmettre le mouvement, par des premiers moyens à courroie (17), au moins à une roue de renvoi (18) disposée fondamentalement coaxiale avec l'arbre de rotation (19) dudit tambour pivotant (12), **caractérisée en ce qu'**elle comprend une pluralité de courroies secondaires (20) avec double denture, chacune étant apte à transmettre le mouvement de ladite roue de renvoi (18) à au moins un desdits cylindres, galets ou brosses (13, 113).

2. Machine selon la revendication 1, **caractérisée en ce que** ledit dispositif de transmission de mouvement comprend une courroie secondaire (20) avec double denture pour chacun desdits cylindres, galets ou brosses (13, 113).

3. Machine selon la revendication 1, **caractérisée en ce que** chacune desdites courroies secondaires (20) avec double denture est apte à transmettre le mouvement de rotation à deux ou à plusieurs desdits cylindres, galets ou brosses (13, 113).

4. Machine selon la revendication 1, **caractérisée en ce que** chaque courroie secondaire (20) avec double denture coopère avec au moins deux poulies de renvoi (22), au moins une (22a) desquelles pouvant être déplacée latéralement et/ou radialement afin de régler la tension de la courroie correspondante (20).

5. Machine selon la revendication 1, **caractérisée en ce qu'**il s'agit d'une ponceuse (11) comprenant une pluralité de brosses (13) recouvertes de matériel abrasif (14).

6. Machine selon la revendication 1, **caractérisée en ce qu'**il s'agit d'une laineuse (11) comprenant une pluralité de cylindres (113) recouverts de matériel lainant.
